# EUROPEAN PATENT APPLICATION

(11) **EP 3 141 128 A1**
(43) Date of publication of application: **15.03.2017**
(21) Application number: 16187900.2
(22) Date of filing: 08.09.2016
(51) Int. Cl.: A21C 15/00

(54) **HYBRID COOKIE FILLER FOR FILLING WITH CREAMS WITH A DIFFERENT STRUCTURE**

(30) Priority: 08.09.2015 IT UB20153474
(71) Applicant: Food Processing Equipment S.r.l., 43126 Parma (IT)
(72) Inventor: RUBINI, Ilvo, 43121 PARMA (IT)
(74) Representative: Benelli, Cristian

(57) **Abstract**

Hybrid cookie filler 1 for filling creams with a different structure, comprising at least one cookie feeder 2 arranged in vertical direction from top downwards, a stepping advance line 3 arranged on a lower horizontal plane wherein at least two different filling heads 4, 5, a dispensing head translating in an alternating motion 4 and a rotary syringe 5 downstream of the cookie feeder 2 and above the stepping advance line 3 are arranged in a sequence.

## Description

### SCOPE OF THE INVENTION

The present invention falls within the field of cookie filling machines, also referred to as "cookie fillers".

These machines can make tartelettes, or i.e. cookies or crackers with filling cream on the upper face or sandwiches, i.e. two cookies or crackers with intermediate filling cream.

### PRIOR ART

Cookie fillers of known type are essentially divided into two categories: "rotary" and "in line".

In both cases, these are machines with a productivity which can range from a few hundred filled cookies per minute up to a few thousand filled cookies per minute.

Rotary fillers are specific for filling with creams having a high consistency and cannot be used for fluid creams.

The main operating features that distinguish rotary fillers are:
- the filling cream is deposited on the cookie by a rotary syringe;
- the arrival of the cookies is not in axis with the main filling axis of the machine, i.e. feeding takes place generally in vertical direction from top downwards, while the next advance below the filling zone takes place on a horizontal plane; the cookies, arranged in dedicated loaders, are presented to the machine stacked according to a vertical axis and are inserted in the process on horizontal chains with prongs;
- the sandwiches are formed by a second vertical feeding, from top downwards, placed after the rotary filling syringe for inserting the cookie or cracker that serves as a top.

In line fillers are also called capper machines; these machines are specific for the filling with rather fluid creams and cannot be used for creams with high consistency.

The main operating features that distinguish in line fillers are:
- the filling cream is deposited on the cookie by dispensing heads translating in an alternating motion according to the line axis;
- the arrival of the cookies is in axis with the filling line and the cookies arrive lying on conveyor belts, after regularization in a row and rank matrix; in the case of sandwiches, the ranks are alternating, i.e. with straight and reverse cookies.
- Sandwiches are made, after the translating filling dispensing heads, by overlapping by means of suction grippers using the Venturi principle.

Said sandwiching machines, in addition to having two very different feeds of the plain cookie, have the limitation of being dedicated to a type of filling with specific consistency, thus they have a head suitable to for treating either only fluid creams or only relatively solid creams.

In fact, machines suitable for treating fluid and relatively solid creams alternatively or simultaneously are not known in the art.

### DESCRIPTION AND ADVANTAGES OF THE INVENTION

An object of the present invention is to provide cookie filler with a highly flexible, rational solution and with a significant cost optimization.

These and other objects are achieved with the features of the invention described in the independent claim 1. The dependent claims describe preferred and/or particularly advantageous aspects of the invention.

In particular, one embodiment of the present invention provides a hybrid cookie filler capable of making what can currently be made only with two complete and different machines.

Said hybrid cookie filler is provided with a cookie advance line arranged on a lower plane above which at least two different heads are arranged: a rotary syringe head and a dispensing head translating in an alternating motion.

With this solution, creams with different structure, either fluid or consistent, can be treated on the same line without forcing the customer to buy two complete machines, each dedicated to a different filling consistency.

Another aspect of the invention is to provide a machine that not only enables the alternate use of creams with different consistency, but also and above all the simultaneous use thereof. This, for example, allows making sandwiches with a bilayer filling with creams different in structure.

Depending on how the sequence of filling heads and feeding of cookies or crackers for closing the sandwich is made, it will be possible to make very different cookies or crackers. For example, a solution with two heads, a rotary syringe one followed by a translating head (or vice versa) after which the feeding of cookies or crackers to close the sandwich is arranged allows making sandwiches with two different consistency creams inside; another solution that provides for example a rotary syringe head, the feeding of cookies or crackers to close the sandwich and a translating head in a sequence allows making sandwiches having inside a cream with a higher consistency and a more fluid cream on the top of the cookie which serves as top.

These and other different configurations allow making a wide range and variety of products.

Said objects and advantages are all achieved by the hybrid cookie filler for creams with a different structure, object of the present invention, which is characterized by the claims below.

### BRIEF DESCRIPTION OF THE FIGURES

This and other features will become more apparent from the following description of some of the configurations, illustrated purely by way of example in the accompanying drawings.
- Figure 1: shows an isometric view of a hybrid cookie filler for creams with a different structure, in a specific configuration which provides in sequence: a cookie feeder, a dispensing filling head translating in an alternating motion, a rotary syringe filling head and a second cookie feeder.
- Figure 2: shows a top view of a hybrid cookie filler in the same configuration shown in figure 1;
- Figure 3: shows a lateral view of a hybrid cookie filler in the same configuration shown in figure 1 and 2;
- Figure 4: shows an isometric view of a hybrid cookie filler for creams with a different structure, in a different configuration which provides in sequence: a cookie feeder, a dispensing filling head translating in an alternating motion, a second cookie feeder and a rotary syringe filling head.

### DESCRIPTION OF THE INVENTION

With particular reference to the figures, reference numeral 1 indicates the hybrid filler for creams with different structure, or creams with different consistency; said machine is suitable for simultaneously or alternately treating both rather fluid and high consistency creams.

Cookie fillers of known type are essentially divided into two categories: "rotary" and "in line". The first ones are specific for filling with creams having a high consistency while the second ones can only be used for fluid creams. The main difference is given by the technology of the filling head that, in the case of rotary machine, has a rotary syringe and in the case of in-line machine, has dispensing heads translating in an alternating motion. Tartellettes or sandwiches can be made with both machines.

The hybrid filler 1 for creams with a different structure object of the present invention comprises at least one cookie feeder 2 arranged in vertical direction from top downwards and a stepping cookie advance line 3 arranged on a lower horizontal plane; continuing in the direction of the cookie stream, at least two different filling heads 4, 5: a dispensing head translating in an alternating motion 4 and a rotary syringe 5 downstream of the cookie feeder 2 and above the stepping advance line 3 are arranged in a sequence.

### FIRST EMBODIMENT EXAMPLE

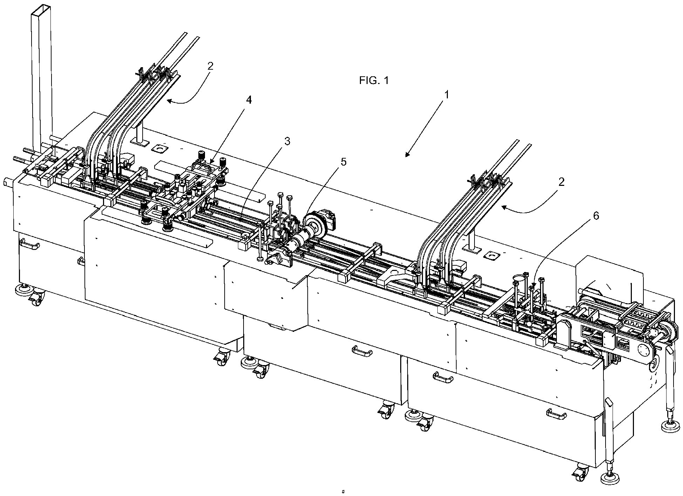

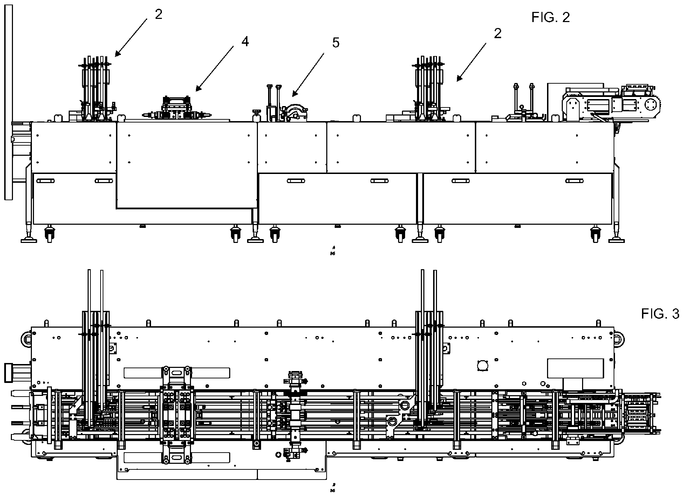

Figure 1, 2 and 3 show a specific configuration of a machine which is provided with a plain cookie feeder 2, a dispensing head translating in an alternating motion 4, followed by the rotary syringe head 5 and by a cookie or cracker feeder 2 for closing the sandwich.

The cookie feeder 2 operates according to an axis orthogonal to the main filling axis of the machine, i.e. feeding 2 takes place in vertical direction from top downwards; the cookies, arranged into dedicated loaders, are stacked according to a vertical axis and are placed in the process on the stepping advance line 3 placed on a horizontal plane below the filling area.

The cookies that drop from the loaders by gravity and due to the weight of the cookies above rest on chains or horizontal wires where a series of constant pitch prongs push them forward under the filling heads 4 and 5.

If sandwiches are to be made, the filling heads 4 and 5 are followed by a second feeder 2, or a series of loaders that feed the cookies that serve as a top. The top cookie falls directly on the filled cookie, the drop of the top cookie being synchronized with the advance of the filled cookie. Generally, a calibrated pressing member 6 follows that compacts the sandwich.

It is understood however that what is described above has a value of non-limiting example, therefore, possible variants of detail that may be necessary for technical reasons and / or functional, are considered from now falling within the same protective scope defined by the claims indicated below.

For example in a further configuration of the hybrid cookie filler 1, the filling heads may reversed and so the rotary syringe filling head 5 may precede the dispensing head translating in an alternating motion 4.

The above solutions bearing a feeder 2 of plain cookies or crackers and two heads, a rotary syringe 5 followed by a translating head 4 or vice versa, after which a feeder 2 of cookies or crackers for closing the sandwich is arranged, allows making sandwiches with two different consistency creams inside.

### SECOND EMBODIMENT EXAMPLE

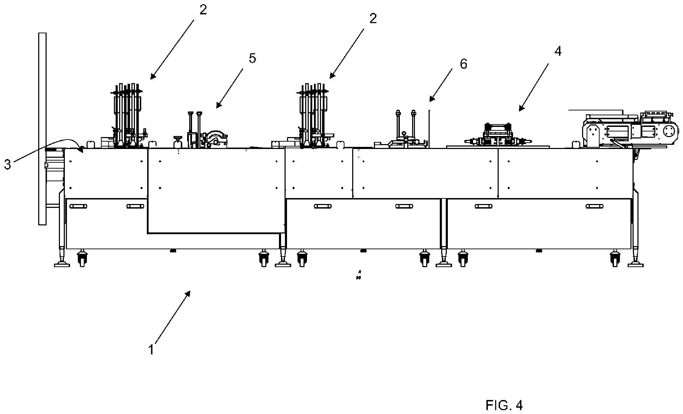

With particular reference to figure 4, the hybrid cookie filler 1 may have a feeder 2 of top cookies between the two different filling heads 4 and 5, arranged in vertical direction from top downwards.

Said solution, which has a feeder 2 of plain cookies or crackers, a rotary syringe head 5, a feeder 2 of cookies or crackers for closing the sandwich and a translating head 4 in a sequence, allows making sandwiches having a cream with a higher consistency inside and a more fluid cream on top of the cookie which serves as a top.

In all the embodiment examples described of the hybrid cookie filler 1 object of the present invention, the different filling heads 4 and 5 can work simultaneously or exclusively.

## Claims

1. Hybrid cookie filler (1) for filling with creams with a different structure, comprising at least one cookie feeder (2) arranged in vertical direction from top downwards, a stepping advance line (3) arranged on a lower horizontal plane **characterized in that** at least two different filling heads (4, 5), a dispensing head translating in an alternating motion (4) and a rotary syringe (5) downstream of the cookie feeder (2) and above the stepping advance line (3) are arranged in a sequence.

2. Hybrid cookie filler (1) according to claim 1, **characterized in that** the rotary syringe filling head (5) precedes or follows the dispensing head translating in an alternating motion (4).

3. Hybrid cookie filler (1) according to claim 1, **characterized in that** a further cookie feeder (2) is provided, arranged in vertical direction from top downwards and positioned in a sequence downstream of different filling heads (4, 5).

4. Hybrid cookie filler (1) according to claim 1, **characterized in that** a second cookie feeder (2) is inserted between the two different filling heads (4, 5), arranged in vertical direction from top downwards.

5. Hybrid cookie filler (1) according to claim 1, **characterized in that** the different filling heads (4, 5) work simultaneously or exclusively.

6. Hybrid cookie filler (1) according to claim 1, **characterized in that** the cookie feeder (2) operates according to an axis orthogonal to the main filling axis of the machine, i.e. feeding (2) takes place in vertical direction from top downwards; the cookies, arranged into dedicated loaders, are stacked according to a vertical axis and are placed in the process on the stepping advance line (3) placed on a horizontal plane below the filling area; the cookies that drop from the loaders by gravity and due to the weight of the cookies above rest on chains or horizontal wires where a series of constant pitch prongs push them forward under the filling heads (4) and (5).
